# EUROPEAN PATENT SPECIFICATION

(11) **EP 3 774 413 B1**
(45) Date of publication and mention of the grant of the patent: **19.11.2025**
(21) Application number: 18911715.3
(22) Date of filing: 15.10.2018
(51) Int. Cl.: B60G 17/052, F16F 9/46, F16K 31/06, F16K 39/02, F16K 41/12, F16F 9/34

(54) **SOLENOID VALVE ASSEMBLY FOR SWITCHING MODE IN SUSPENSION SYSTEM**
MAGNETVENTILANORDNUNG FÜR MODUSUMSCHALTUNG IN EINEM AUFHÄNGUNGSSYSTEM
ENSEMBLE ÉLECTROVANNE DE COMMUTATION DE MODE DANS UN SYSTÈME DE SUSPENSION

(30) Priority: 29.03.2018 KR 20180036422
(43) Date of publication of application: 17.02.2021
(73) Proprietor: INFAC Corporation, Seoul 05641 (KR)
(72) Inventor: KIM, Jang-Bo, Suwon-si, Gyeonggi-do 16648 (KR); PARK, Gun-Young, Suwon-si, Gyeonggi-do 16648 (KR); KANG, Sang-Young, Suwon-si, Gyeonggi-do 16648 (KR)
(74) Representative: Stöckeler, Ferdinand
(86) International application number: PCT/KR2018/012089
(87) International publication number: WO 2019/190013

(56) References cited:
- EP-A1- 3 263 962
- EP-A2- 0 196 621
- JP-A- 2019 084 946
- JP-A- H1 113 604
- JP-U- H0 372 170
- JP-U- H0 458 679
- KR-A- 20100 022 652
- KR-A- 20110 076 512
- KR-B1- 101 944 974
- KR-B1- 101 944 984
- KR-Y1- 200 412 386
- US-A1- 2003 127 294
- US-A1- 2012 313 022
- US-A1- 2014 008 557
- US-A1- 2015 226 348

## Description

### Technical Field

The present disclosure relates to a solenoid valve assembly for switching the mode in a suspension system, and more particularly, to a solenoid valve assembly for switching the mode in a suspension system, which can set an internal path for fluid flow separately independent from an external path for fluid flow with respect to a solenoid valve for adjusting the opening/closing for the flow path between a plurality of chambers to make as the equilibrium state the pressure operating at the inside surface and outside surface of a membrane, thus smoothly controlling the opening and closing of a port by supplying a relatively small magnitude of an operating power applied to a coil of the solenoid, can prevent the sticking of a movable rod with respect to a magnetic core upon the operation of the solenoid valve, thus normally performing the mode conversion, and can additionally minimize the flow cross-sectional area of the air in the internal path for fluid flow by providing a narrow section portion implementing an air cushion function, thus reducing impact noise caused by the opening/closing operation of the valve.

### Background Art

Generally, an Electronic Control Suspension system (ECS) that is applied to a suspension system in a chassis technical art of a vehicle automatically adjusts the height and the damping force of a vehicle body based on driving information or a road state detected by a sensor, or a mode selection by a driver, etc. during driving. Particularly, an Air Spring controlling high-pressure air flow can be configured to variably adjust the damping and stiffness characteristics by controlling the ON/OFF of the solenoid valve.

EP 3 263 962 A1 discloses a valve for liquid or gaseous media in which the forces required to open the inlet, so for lifting the sealing element from the valve seat are reduced by equally sized pressure areas of an elastic pressure compensation element.

JP H04 58679 U discloses a valve with a return spring, a small movable core and a membrane.

JP H11 13604 A discloses an electromagnetic air control valve to improve assembling operability of a membrane by sandwiching a center part of the diaphragm by an abutting part between a trailing end of a valve body and a leading end of a movable core, and sandwiching its outer peripheral part by an abutting part between a valve body and a housing.

JP H03 72170 U discloses a valve with a return spring, a large movable core and a membrane.

US 2015/226348 A1 discloses a two-stage electromagnetic valve in which the pressure receiving diameter of the open-close valve body is configured to be equal to the pressure receiving diameter of the switch valve body, to maximize an effect of a pressure cancel mechanism.

As an example, Korean Patent Laid-Open Publication No. 10-2010-0022652 discloses the solenoid valve for flow control of the Air Spring. In this case, the solenoid valve is configured to include a housing having one side opened, a coil provided inside the housing and for generating an electromagnetic force upon the power application, a bracket for covering one side of the housing and having a hollow portion, a plunger having one side inserted into the hollow portion of the bracket and provided inside the coil and having the other side forming an inlet into which the high-pressure air is flowed to be protruded from the opened side of the housing to the outside, an elevating portion provided inside the plunger and elevated in the vertical direction by the electromagnetic force of the coil to open and close the inlet of the plunger, and a valve portion engaged with one end of the plunger and for receiving the high-pressure air flowed through the inlet opened by the elevation of the elevating portion to discharge it to an outlet.

However, in the conventional solenoid valve that controls the fluid flow, there is a problem in that when the pressure of the fluid used is high, a large electromagnetic force is required for ON/OFF control of the valve and thereby, a large-capacity solenoid valve having a rated capacity larger than necessary is applied or the consumed power for opening/closing control of the valve is increased unnecessarily.

Particularly, in the conventional electronic control suspension system, since the opening/closing adjustment and the fluid-tight maintenance for the flow path of the high-pressure fluid are directly related with stable function and endurance performance, as well as high-pressure air is used, leakage should not occur in fluid-tight parts controlling the fluid flow. Accordingly, the magnitude of pressure used and the possibility of leakage occurrence have a mutually proportional characteristic, such that the solution for the above is required.

In addition, in the conventional ON/OFF control solenoid valve, there are the problems in that it is not possible to implement a normal operation due to sticking of the movable parts such as the plunger for a long-time use, as well as by the fact that the abnormal noise (the impact noise) is caused due to the contact between the parts in the process of controlling the fluid flow.

### Technical Problem

An object of the present disclosure is to provide a solenoid valve assembly for switching the mode in a suspension system, which can, when constituting the solenoid valve assembly capable of implementing a selective switching from the operation of the suspension system into the state of a normal mode or a sport mode, provide an internal path for fluid flow separately independent from an external path for fluid flow for mode switching of the sealed fluid and formed along the inside of the solenoid valve to set as the equilibrium state the pressure applied to both side surfaces of a membrane from the sealed fluid, respectively, thus smoothly controlling the opening and closing switching of a port by supplying a relatively small magnitude of an operating power applied to a coil of the solenoid, can prevent the sticking of a movable rod with respect to a magnetic core upon the operation of the solenoid valve, thus normally performing the mode switching, and can additionally minimize the flow cross-sectional area of the air in the internal path for fluid flow to provide a narrow section portion implementing an air cushion function, thus reducing impact noise caused by the opening/closing operation of the valve.

### Technical Solution

The present invention provides a solenoid valve assembly according to claim 1. Further developments of the invention are defined in the dependent claims.

The present disclosure for solving the problems includes a separator having a plurality of ports that can individually communicate with a plurality of independent chambers, a valve structure body installed to contact with a stepped compartment portion between the ports of the separator to adjust fluid flow between the chambers formed through the port, a solenoid valve for providing an operating force to the valve structure body, and having an internal path for fluid flow implementing pressure equilibrium, the internal path being connected to an external path for fluid flow through the port of the separator, and a membrane provided in the solenoid valve to disconnect the communication between the external path and the internal path for fluid flow; and the solenoid valve, the valve structure body, and the membrane are configured so that an area on which a hydraulic pressure acts through the external path and an area on which a hydraulic pressure acts through the internal path upon opening and closing of the port of the separator are set to be same, and the solenoid valve includes a narrow section portion minimizing the flow cross-sectional area of the internal path for fluid flow.

In the present disclosure, the solenoid valve includes a movable rod coaxially engaged with the valve structure body and movably installed thereon; a magnetic core for movably receiving the movable rod therein, and coaxially engaged with the separator; a plunger coaxially engaged with the movable rod, and movably installed in the axial direction toward the magnetic core; a variable pitch spring interposed between the magnetic core and the plunger; and a bobbin coaxially engaged with the magnetic core, and movably receiving the movable rod and the plunger therein.

In the present disclosure, the movable rod and the plunger include ar axial through-hole portion for forming an internal path, respectively, and the bobbin includes an axial protrusion portion for forming the internal path between an outer circumferential surface of the plunger and an inner circumferential surface of the bobbin, the magnetic core continuously includes a large diameter portion for receiving the variable pitch spring between an outer circumferential surface of the movable rod and an inner circumferential surface of the magnetic core, and a small diameter portion provided on a bottom of the large diameter portion for minimizing the flow cross-sectional area.

In the present disclosure, it is preferable that a stepped portion for supporting a lower end portion of the variable pitch spring is interposed between the large diameter portion and the small diameter portion; and an inner diameter extension portion for setting the flow cross-sectional area to be larger than the large diameter portion is interposed between the outer circumferential surface of the movable rod and the bottom of the small diameter portion.

In the present disclosure, it is preferable that the internal path is set to reach an inside surface of the membrane and sequentially passing through the axial protrusion portion of the movable rod, the axial through-hole portion of the plunger, the axial through-hole portion of the bobbin, the large diameter portion, the small diameter portion, and the inner diameter extension portion.

In the present disclosure, it is preferable that the separator and the magnetic core are provided with a seating end portion for fixing an outer diameter portion of the membrane at a location facing each other, respectively, the seating end portion of the magnetic core is provided with an insertion groove portion concavely formed in the axial direction, and the seating end portion of the separator is provided with a protrusion end portion extended in the axial direction thereof to be inserted into the insertion groove portion.

In the present disclosure, it is preferable that the separator has a stepped portion provided from the seating end portion on the inside thereof, and an annular body for supporting the bottom of the membrane to identically set the area on which the hydraulic pressure acts between the inside surface and outside surface of the membrane is mounted in the stepped portion.

In the present disclosure, it is preferable that the valve structure body includes a mount rod engaged to the movable rod, and a sealing member engaged to the mount rod to contact with the compartment portion of the port.

In the present disclosure, it is preferable that the movable rod is provided with a flange portion protruded in a radial direction for fixing the inner diameter portion of the membrane at the location facing the mount rod to identically set the area on which the hydraulic pressure acts between the inside surface and outside surface of the membrane.

In the present disclosure, it is preferable that the outer diameter portion of the membrane is provided with an outside protrusion portion protruded toward the seating end portion of the magnetic core, the seating end portion of the magnetic core is provided with an inside stopper end portion for preventing deviation of the outside protrusion portion, and, the position of the inside stopper end portion is set at the same radial position as the inner diameter portion of the annular body to symmetrically support the outside protrusion portion.

In the present disclosure, it is preferable that the inner diameter portion of the membrane is provided with an inside protrusion portion protruded toward the flange portion of the movable rod, the flange portion of the movable rod is provided with an outside stopper end portion for preventing deviation of the inside protrusion portion, and, the position of the outside stopper end portion is set at the same radial position as the outer circumferential surface of the mount rod.

In the present disclosure, it is preferable that the sealing member includes a plurality of elastic protrusion portions for maintaining fluid-tight on the portion facing the compartment portion of the separator, the elastic protrusion portion is composed of a first lip portion and a second lip portion concentrically located to be spaced apart from each other an inside and outside of a bottom of the sealing member, respectively, and a protruded length of the second lip portion is set longer than a protruded length of the first lip portion.

In the present disclosure, it is preferable that the first lip portion is formed in a circular structure to tightly contact with the inner circumferential surface of the compartment portion of the separator, and the second lip portion is formed in a divided structure radially located from a center of the first lip portion to tightly contact with an inclined surface formed on the outer circumferential surface of the compartment portion of the separator.

In the present disclosure, it is preferable that the plunger includes a damper installed to be protruded toward the upper inside surface of the bobbin on the upper surface of the plunger, the damper is seated in a receiving groove portion formed on the upper surface of the plunger, and the damper includes a cutting portion for setting the internal path that can mutually communicate the flow path between the axial through-hole portion of the plunger and the axial protrusion portion of the bobbin on at least one location along an entire circumference of the damper.

In the present disclosure, it is preferable that an inside effective area of the membrane including an area of the upper surface of the flange portion and an area of an inside surface of the membrane exposed directly the pressure through the internal path is set to be identical to an outside effective area of the membrane including an area of the lower surface of the annular body exposed to the external path and an area of the outside surface of the membrane exposed directly the pressure through the external path to make the pressure equilibrium state between the inside surface and outside surface of the membrane.

### Advantageous Effects

When switching the drive mode in the suspension system into the state of a normal mode or a sport mode, respectively, the present disclosure can divide the flow path of fluid through each port from the plurality of independent chambers into the external path and the internal path and set the load by the fluid pressure applied to the inside surface and outside surface of the membrane, respectively, as the equilibrium state, thus performing the ON/OFF control for the solenoid valve by a relatively small magnitude of the operating power and thereby, smoothly performing the opening and closing switching for the port of the separator.

In addition, the present disclosure can minimize the flow cross-sectional area in the internal path for fluid flow to provide the narrow section portion implementing the air cushion function, thus reducing the impact noise caused by the opening/closing operation of the valve.

In addition, the present disclosure can replace the spring for elastically supporting the plunger with respect to the magnetic core of the solenoid valve with the variable pitch spring, thus effectively reducing the impact noise caused on the contact portion of the opening/closing portion of the port by implementing a higher elastic force than an initial stage after the initial phase when the solenoid valve switches from the OFF state to the ON state.

### Description of Drawings

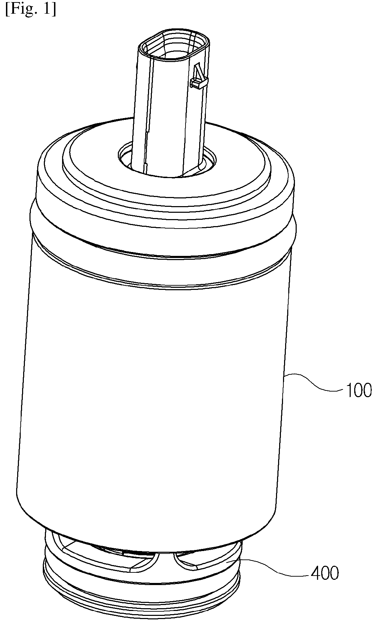

FIG. 1 is a perspective view illustrating the appearance of a solenoid valve assembly for switching the mode in a suspension system in accordance with an embodiment of the present disclosure.
FIG. 2 is a longitudinal cross-sectional diagram illustrating the internal configuration of the solenoid valve assembly for switching the mode in the suspension system illustrated in FIG. 1.
FIG. 3 is an exploded perspective diagram illustrating by separating a case and an electrical insulating body portion, respectively, from the solenoid valve assembly for switching the mode in the suspension system illustrated in FIG. 1.
FIG. 4 is a perspective diagram illustrating the engaged state of the solenoid valve and the separator corresponding to the main parts excluding peripheral components such as a case, an electrical insulating body portion, and a terminal in the solenoid valve assembly for switching the mode in the suspension system in accordance with the embodiment of the present disclosure.
FIG. 5 is an exploded perspective diagram illustrating at the top by separating the engaged relation between the solenoid valve and the separator illustrated in FIG. 4.
FIG. 6 is an exploded perspective diagram illustrating at the bottom by separating the engaged relation between the solenoid valve and the separator illustrated in FIG. 4.
FIG. 7 is a cross-sectional diagram illustrating by partially expanding a main configuration of FIG. 2 in order to explain the air cushion function portion in the solenoid valve assembly for switching the mode in the suspension system in accordance with the embodiment of the present disclosure.
FIG. 8 is a partially expanded diagram of the cross-sectional diagram illustrated in FIG. 7.

### Best Mode

Hereinafter, the preferred embodiments of the present disclosure will be described in detail with reference to the accompanying drawings.

Referring to the drawings, the present disclosure, as a solenoid valve assembly for performing an ON/OFF control for switching the mode in a suspension system, is configured to include a case 100 installed on the suspension system to be located on the outermost portion thereof, an electrical insulating body portion 200 to be built-in in the case 100, a solenoid valve 300 received inside the electrical insulating body portion 200 and magnetized upon electric conduction to generate an electromagnetic force, a separator 400 engaged to the solenoid valve 300 and having the port that can individually communicate with a plurality of chambers provided in the suspension system, and a valve structure body 500 for differently switching a function mode in the suspension system such as a normal mode or a sport mode by being interlocked with the operation of the solenoid valve 300 to adjust the opening/closing for the port of the separator 400 to allow or block fluid flow through a flow path.

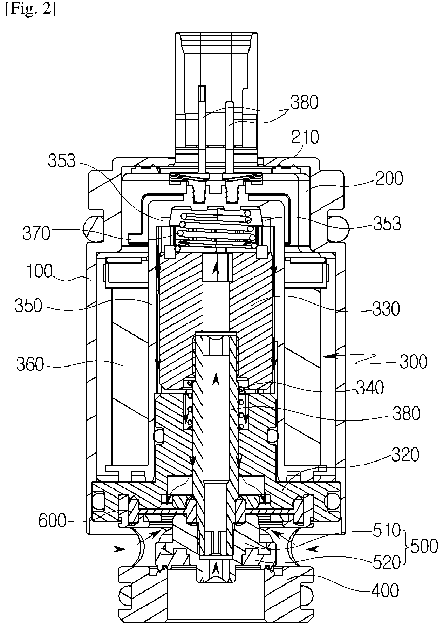

The case 100, as the member formed in the hollow-cylindrical shape in which the top and bottom thereof are opened, respectively, is configured to receive the solenoid valve 300 therein. Particularly, referring to the longitudinal cross-sectional diagram in FIG. 2, the case 100 is mounted to the inside of the lower end portion thereof in the state fixing a magnetic core 320 of the solenoid valve 300. In this time, an O-ring is interposed between the inner circumferential surface of the lower end portion of the case 100 and the outer circumferential surface of the magnetic core 320 of the solenoid valve 300 to form the fluid-tight structure that can be separated from the outside.

The electrical insulating body portion 200 is formed by an injection molding with an electrical insulating material, and is formed as the structure that can be inserted into the inside of the case 100 in the state that the solenoid valve 300 is built-in therein. In this case, a ring-shape buffering member 210 is separately interposed between the upside inner circumferential surface of the case 100 and the upside outer circumferential surface of the electrical insulating body portion 200, thus mitigating the impact caused therebetween.

The solenoid valve 300 is configured to provide the operating force downward toward the separator 400 with respect to the valve structure body 500 when switched into an ON state by supplying the operating power, and separately to have an internal path for fluid flow formed as the inner space of the solenoid in order to be separated from an external path to implement the pressure equilibrium, together with the external path for fluid flow sealed with the chamber of the suspension system formed through the port of the separator 400. That is, in the solenoid valve 300, the external path is provided to communicate between the plurality of chambers for switching the mode in the suspension system, and the internal path is provided to smoothly perform the opening and closing of the port by supplying a relatively small magnitude of an operating power when the solenoid valve assembly becomes ON and OFF for switching the mode in the solenoid system.

In addition, the solenoid valve 300 includes a membrane 600 formed of a flexible material in order to disconnect the communication between the external path for fluid flow and the internal path for fluid flow. In this case, upon the opening and closing of the port formed on the separator 400 depending upon the operation of the valve structure body 500, the solenoid valve assembly for switching the mode in the suspension system in accordance with the present disclosure is configured so that the area, on which the hydraulic pressure acts, of the valve structure body 500 including the outside surface of the membrane 600 receiving the pressure through the external path and the area, on which the hydraulic pressure acts, of the valve structure body 500 including the inside surface of the membrane 600 receiving the pressure through the internal path are set to be the same.

That is, the solenoid valve 300, the valve structure body 500, and the membrane 600 are configured so that the area on which the hydraulic pressure acts receiving the pressure through the external path and the area on which the hydraulic pressure acts receiving the pressure through the internal path upon opening and closing of the port of the separator 400 are set to be the same. Accordingly, the solenoid valve assembly in accordance with the present disclosure can open or close the port formed on the separator 400 by supplying a relatively small magnitude of the operating power applied to a coil 360 of the solenoid valve 300.

In addition, the solenoid valve 300 provides a narrow section portion that can implement an air cushion function by suddenly shrinking and minimizing the flow cross-sectional area of the air in the internal path for fluid flow to provide a flow resistance to the air flow, thus effectively reducing the impact noise caused by opening/closing operation of the valve.

In addition, the solenoid valve 300 is configured to replace the spring providing a restoring force to a plunger 330 with a variable pitch spring {an unequal pitch spring or a non-linear spring} to provide a higher elastic force than an initial stage after the initial operation upon the ON/OFF switching, thus reducing the impact noise caused at the contact portion of the port opening/closing portions.

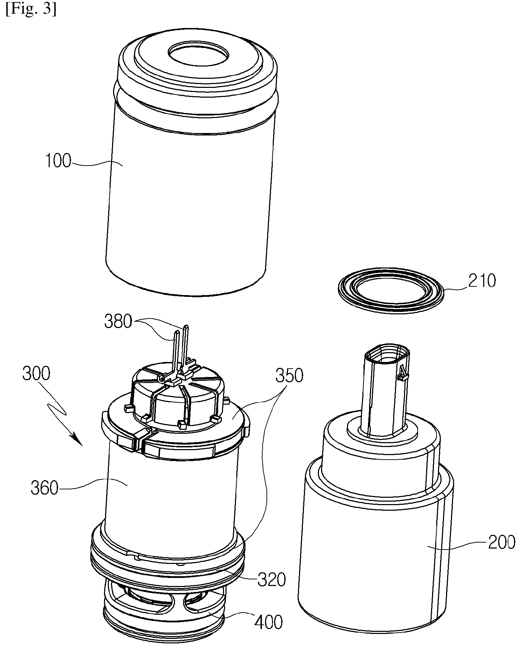

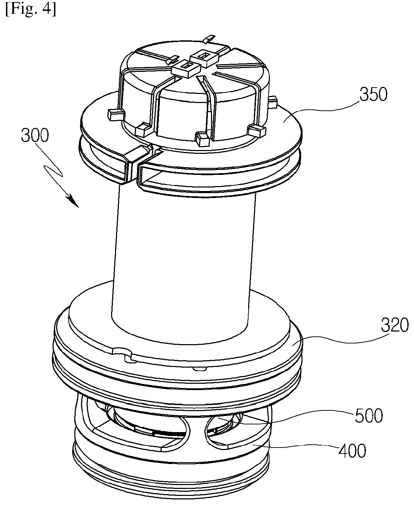

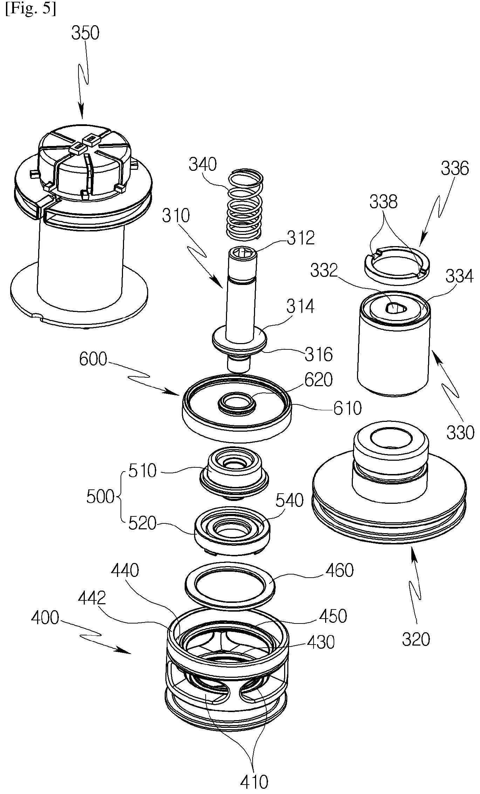

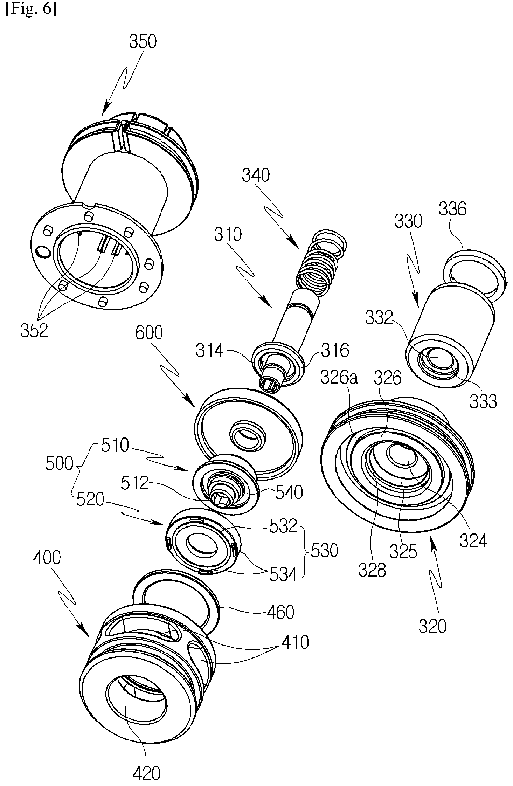

Referring to FIGS. 2 to 8, a detailed configuration of the solenoid valve 300 will be described.

The solenoid valve 300 is configured to include a hollow-shape movable rod 310 that is coaxially engaged with the valve structure body 500 inside the case 100 to be movably installed in the vertical axial direction, the hollow-shape magnetic core 320 fixed to the downside inner circumferential surface of the case 100 while movably receiving the movable rod 310 therein and coaxially engaged at the top of the separator 400, the hollow-shape plunger 330 coaxially engaged on the upper end portion of the movable rod 310 and movably installed in the axial direction toward the magnetic core 320, a variable pitch spring 340 interposed between the upper end portion of the magnetic core 320 and the lower end portion of the plunger 330 to provide the restoring force to the plunger 330, and having non-constant pitch in order to implement a higher elastic force than an initial stage after the initial operation, a hollow-shape bobbin 350 coaxially engaged at the outside of the magnetic core 320 and movably receiving the movable rod 310 and the plunger 330, respectively, therein, the coil 360 wound around the bobbin 350 to generate the magnetic force depending upon the power application for generating a moving force of the plunger 330 toward the magnetic core 320, a taper spring 370 interposed between the upside outer circumferential surface of the plunger 330 and the upside inner circumferential surface of the bobbin 350 for implementing a buffering function upon the restoring movement of the plunger 330 in order to minimize noise occurrence, and a terminal 380 protruded to be electrically connected with an external power in order to supply the operating power to the coil 360.

The movable rod 310 includes an axial through-hole portion 312 for providing fluid flow along the axial direction of the movable rod 310 for providing in order to form the internal path thereof. In this case, the axial through-hole portion 312 is preferably formed at the axial center of the movable rod 310, but it is not limited thereto.

In addition, the movable rod 310 includes a flange portion 314 that is horizontally protruded outward along the radius direction over the entire circumference of the outer circumferential surface thereof to fix the inner diameter portion of the membrane 600 at the top thereof. In this case, the flange portion 314 identically sets the area on which the hydraulic pressure acts between the inside surface and outside surface of the membrane 600, together with supporting the inner diameter portion of the membrane 600. For this purpose, the area of the protruded portion of the flange portion 314 is set to be the same as that of the upper surface of a mount rod 510 that will be described later.

The magnetic core 320 sets the internal path between the outer circumferential surface of the movable rod 310 along the inner circumferential surface of the through-hole formed on the center thereof, and is particularly configured to have a narrow section portion in order to implement an air cushion function by suddenly shrinking and optimizing the flow cross-sectional area of the air in the internal path for fluid flow.

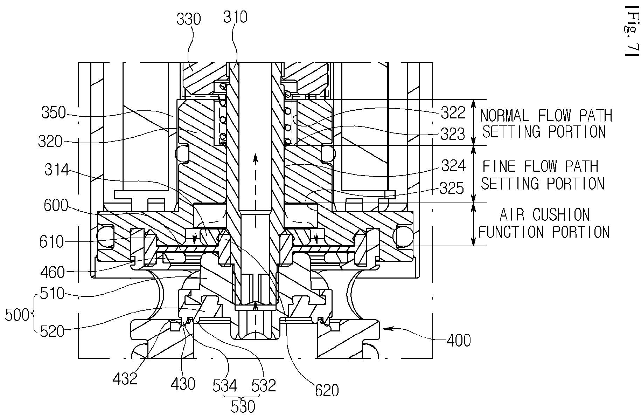

For this purpose, the magnetic core 320 forms, as illustrated in FIG. 7, a large diameter portion 322 for receiving the variable pitch spring 340 while setting the flow cross-sectional area of the air to be relatively large between the portion facing the plunger 330 and the outer circumferential surface of the movable rod 310 to provide a normal flow path, and a small diameter portion 324 for setting the flow cross-sectional area of the air to be relatively small between the portion facing the membrane 600 from the bottom of the large diameter portion 322 and the outer circumferential surface of the movable rod 310 to provide a fine flow path corresponding to the narrow section portion.

In this case, a stepped portion 323 for supporting the lower end portion of the variable pitch spring 340 is interposed between the large diameter portion 322 and the small diameter portion 324, and an inner diameter extension portion 325 is formed for setting the flow cross-sectional area to be larger than the large diameter portion 322 between the outer circumferential surface of the movable rod 310 and the portion facing the membrane 600 from the bottom of the small diameter portion 324 to optimize the air cushion function.

Accordingly, the magnetic core 320 constitutes a normal flow path setting portion formed by the large diameter portion 322, a fine flow path setting portion formed by the small diameter portion 324, and an air cushion function portion formed by the inner diameter extension portion 325, respectively, between the outer circumferential surface of the movable rod 310 along the inner circumferential surface of the through-hole formed on the center thereof.

In addition, the magnetic core 320 includes a seating end portion 326 contacting with the upper surface of the outer diameter portion of the membrane 600 over the entire circumference of the bottom thereof. In this case, the seating end portion 326 firmly fixes the entire circumference of the outer diameter portion thereof by contacting with the outer diameter portion of the membrane 600. In addition, the outside of the seating end portion 326 of the magnetic core 320 is provided with an insertion groove portion 326a that is concavely formed in the axial direction along the entire circumference to receive and engage a protrusion end portion 442 formed on the outer diameter portion of the separator 400.

The plunger 330 includes an axial through-hole portion 332 for providing fluid flow along the axial direction of the plunger 330 in order to form the internal path and communicating with the axial through-hole portion 312 of the movable rod 310. In this case, the axial through-hole portion 332 is preferably formed on the axial center of the plunger 330, but it is not limited thereto. In addition, the plunger 330 includes a stepped portion 333 for seating and supporting the upper end portion of the variable pitch spring 340 on the lower end portion of the axial through-hole portion 332.

In addition, the plunger 330 includes a ring-shape damper 336 that is installed to be protruded toward the upper inside surface of the bobbin 350 on the upper surface thereof to buffer the impact with the upside inner circumferential surface of the bobbin 350. Accordingly, when the solenoid valve 300 is switched from the ON state to the OFF state, the damper 336 can effectively reduce the impact caused by the contact of the upper end portion of the plunger 330 and the upside inner circumferential surface of the bobbin 350 and additionally, minimize the occurrence of the abnormal noise due to the contact thereof.

In this case, the damper 336 is inserted and seated into a receiving groove portion 334 concavely formed on the upper surface of the plunger 330, and the damper 336 includes a cutting portion 338 for securing the internal path for fluid flow by mutually communicating the flow path between the axial through-hole portion 332 of the plunger 330 and an axial protrusion portions 352 of the bobbin 350 on at least one portion along the entire circumference thereof. However, it is possible that the internal path for fluid flow including the cutting portion 338 of the damper 336 is blocked during the operation of the valve when the taper spring 370 is completely compressed because the completely compressed taper spring 370 may block the cutting portion 338 of the damper 336.

For solving this problem as depicted in Fig. 2, a plurality of block-preventing grooves 353 are provided on the internal upper end surface of the bobbin 350 so as to prevent the internal path for fluid flow including the cutting portion 338 of the damper 336 from being blocked when the taper spring 370 is completely compressed. The variable pitch spring 340 is interposed between the upper end portion of the through-hole of the magnetic core 320 and the lower end portion of the through-hole of the plunger 330 so that both end portions thereof are supported, respectively to provide the restoring force for the upward movement with respect to the plunger 330 upon non-magnetization of the coil 360. In this case, the upper end portion of the variable pitch spring 340 is supported by the stepped portion 333 formed on the inner circumferential surface of the axial through-hole portion 332 of the plunger 330, and the lower end portion thereof is supported by the stepped portion 323 formed on the inner circumferential surface of the through-hole of the magnetic core 320.

Particularly, the variable pitch spring 340 sets the downward speed of the plunger 330 depending upon the electromagnetic force generated from the magnetic core 320 during the initial phase when the solenoid valve 300 is switched from the OFF state to the ON state to be relatively large, and after the initial phase, can set the downward displacement movement speed of the plunger 330 to be relatively small by implementing a higher elastic force than the initial stage, thus effectively reducing the impact noise caused at the contact portion of the port opening/closing portions of the separator 400. In addition, it is natural that the variable pitch spring 340 can set the upward displacement movement speed to be relatively small after the initial operating timing even when the solenoid valve 300 is switched from the ON state to the OFF state, thus effectively reducing the impact noise.

The bobbin 350 includes the axial protrusion portions 352 for fluid flow lengthily formed along the axial direction thereof as the shape protruded to the outside for forming the internal path between the outer circumferential surface of the plunger 330 on the inner circumferential surface thereof. In this case, the axial protrusion portions 352 are formed so that appropriate intervals are formed between each of the axial protrusion portions 352 over the entire inner circumferential surface of the bobbin 350. In addition, the axial protrusion portions 352 provided between the inner circumferential surface of the bobbin 350 and the outer circumferential surface of the plunger 330 for forming the internal path can be formed on the outer circumferential surface of the plunger 330, and formed in the recess shape concavely formed in the thickness direction of the material in addition to the protrusion portion shape.

The coil 360 is wound around the outer circumferential surface of the bobbin 350 to be magnetized by the operating power provided through the terminal 380 to generate the magnetic force and thereby, generates the moving force of the plunger 330 toward the magnetic core 320.

The taper spring 370 is interposed between the upside outer circumferential surface of the plunger 330 and the upside inner circumferential surface of the bobbin 350 for implementing a buffering function upon the restoring movement of the plunger 330 to minimize the noise occurrence. In this case, the lower end portion of the taper spring 370 is installed to be fitted into the inner circumferential surface of the damper 336 to be supported. That is, the lower end portion of the taper spring 370 can be installed to be fitted into the inner circumferential surface of the damper 336 to guide an accurate location setting upon the assembly.

The terminal 380 is installed to be electrically connected with the coil 360 at the upside of the bobbin 350. Particularly, the terminal 380 is located to be exposed to the outside through the upside opening portion of the case 100 in the state received inside the upside structure of the electrical insulating body portion 200.

That is, in the solenoid valve assembly for switching the mode in the suspension system in accordance with the present disclosure, the internal path for fluid flow is set to reach the inside surface of the membrane 600 sequentially through the axial through-hole portion 312 of the movable rod 310, the axial through-hole portion 332 of the plunger 330, the axial protrusion portions 352 of the bobbin 350, and the large diameter portion 322, small diameter portion 324, and inner diameter extension portion 325 of the magnetic core 320.

Particularly, the internal path for fluid flow interposed between the outer circumferential surface of the movable rod 310 and the inner circumferential surface of the magnetic core 320 is divided into the normal flow path setting portion formed by the large diameter portion 322, the fine flow path setting portion formed by the small diameter portion 324, and the air cushion function portion formed by the inner diameter extension portion 325, respectively to minimize the flow cross-sectional area of the air on the fine flow path setting portion formed by the small diameter portion 324 through the normal flow path setting portion formed by the large diameter portion 322 from the outlet of the internal path for fluid flow to finally achieve the buffering effect by the compressibility of the air on the air cushion function portion formed by the inner diameter extension portion 325 in the state optimizing the air flow, thus reducing the impact noise caused by the opening/closing operation of the valve as much as possible.

The separator 400 is formed as the hollow-shape structure configured to have the air flow port that can individually communicate with a plurality of chambers (not shown) provided in the suspension system and to be engaged to the bottom of the magnetic core 320 of the solenoid valve 300.

That is, the separator 400 includes a first port 410 located in the horizontal direction with respect to the member, a second port 420 intersected with the first port 410 to be located in the vertical direction, and a compartment portion 430 formed in the stepped shape along the entire circumference between the first port 410 and the second port 420 to contact with a sealing member 520 of the valve structure body 500. The first port 410 and the second port 420 are formed as an independent structure with respect to a separate shield structure (not shown) installed at the outside of the separator 400, respectively and thereby, the separator 400 allows the free flow of the fluid sealed in the chamber only within the internal path through the valve structure body 500.

In addition, the first port 410 communicates with any one chamber of the plurality of chambers in the suspension system, and is radially spaced apart from the center of the member to be formed in plural. In addition, the second port 420 communicates with another one chamber of the plurality of chambers in the suspension system, and is formed in the single shape that can communicate with the internal path sequentially passing through the through-hole of the mount rod 510 constituting the valve structure body 500, the axial through-hole portion 312 of the movable rod 310, and the axial through-hole portion 332 of the plunger 330.

In addition, the separator 400 includes a seating end portion 440 that contacts with the lower portion surface of the outer diameter portion of the membrane 600 at the location facing the seating end portion 326 of the magnetic core 320 over the entire circumference of the upside outer circumferential surface thereof to support it. In this case, the seating end portion 440 of the separator 400 includes a protrusion end portion 442 extended in the axial direction along the entire circumference to be inserted into the inside of the insertion groove portion 326a of the magnetic core 320 at the outside thereof.

That is, the engagement between the separator 400 and the magnetic core 320 is made by inserting the protrusion end portion 442 into the inside of the insertion groove portion 326a. Accordingly, the outer diameter portion of the membrane 600 can be supported by tightly contacting firmly with the upside outer circumferential surface thereof and the downside outer circumferential surface thereof between the seating end portion 326 of the magnetic core 320 and the seating end portion 440 of the separator 400, respectively.

In addition, the separator 400 includes a concave-shape stepped portion 450 along the entire circumference from the seating end portion 440 therein. In addition, a ring-shape annular body 460 is separately mounted in the stepped portion 450 in order to identically set the area on which the hydraulic pressure acts between the inside surface and outside surface of the membrane 600 in addition to supporting the outer diameter portion of the membrane 600.

The valve structure body 500 includes the mount rod 510 engaged to the outer circumferential surface of the lower end portion of the movable rod 310, and the sealing member 520 engaged to the mount rod 510 and formed in the flexible material tightly contacting with the compartment portion 430 of the separator 400. The mount rod 510 is formed in the hollow-shape structure forming an opening portion 512 that is the through-hole shape in order to tightly receive the lower end portion of the movable rod 310 on the center thereof. In addition, the sealing member 520, as the hollow-shape structure engaged to the bottom of the mount rod 510, includes a plurality of elastic protrusion portions 530 for fluid-tight maintenance in order to optimally block the communication between the ports on the bottom toward the compartment portion 430 of the separator 400.

Herein, the elastic protrusion portion 530 is composed of a first lip portion 532 and a second lip portion 534 located to be protruding from the bottom of the sealing member 520 at the inside/outside of the bottom of the sealing member 520 and formed in the concentric circles, and the protruded length of the second lip portion 534 is set preferably longer than the protruded length of the first lip portion 532. In addition, the first lip portion 532 is formed in the circular structure integrally formed along the entire circumference to tightly contact with the inner circumferential surface of the compartment portion 430 of the separator 400, and the second lip portion 534 is formed in the split-shape structure radially located from the center of the first lip portion 532 to tightly contact with an inclined surface 432 formed on the outer circumferential surface of the compartment portion 430 of the separator 400 to serve, in addition, the centering of the movable rod and improve leak tightness.

Accordingly, when the sealing member 520 contacts with the compartment portion 430 of the separator 400 depending upon the operation of the solenoid valve 300, the second lip portion 534 of the elastic protrusion portion 530 is deformed by firstly contacting with the inclined surface 432 of the compartment portion 430. As a result, the impact caused by the contact between the sealing member 520 of the valve structure body 500 and the compartment portion 430 of the separator 400 can be effectively reduced through the deformation of the second lip portion 534 of the elastic protrusion portion 530.

In addition, since the first lip portion 532 of the elastic protrusion portion 530 can tightly contact over the entire circumference of the inner circumferential surface of the compartment portion 430, the communication between the ports can be optimally blocked. That is, the first lip portion 532 of the elastic protrusion portion 530 can be overlapped with the inner circumferential surface of the compartment portion 430 by the protruded length, thus enhancing fluid-tight performance.

Meanwhile, the engaged portion between the mount rod 510 and the sealing member 520 is provided with an uneven-shape protrusion portion 540, respectively. In this case, the uneven-shape protrusion portion 540 is independently formed on the respective corresponding portion between the bottom of the mount rod 510 and the top of the sealing member 520, and makes the engagement between the mount rod 510 and the sealing member 520 stronger. For this purpose, the uneven-shape protrusion portion 540 is formed in the engaged structure of a forced press-fitting method such as a Dovetail structure.

The membrane 600 includes an outside protrusion portion 610 upward protruded toward the seating end portion 326 of the magnetic core 320 along the entire circumference on the outer diameter portion thereof. In addition, the seating end portion 326 of the magnetic core 320 is provided with an inside stopper end portion 328 downward protruded along the entire circumference for preventing deviation of the outside protrusion portion 610. In this case, the location of the inside stopper end portion 328 can be set at the same radial position as the inner diameter portion of the annular body 460 to symmetrically support the outside protrusion portion 610.

In addition, the membrane 600 includes an inside protrusion portion 620 upward protruded toward the flange portion 314 of the movable rod 310 along the entire circumference on the inner diameter portion thereof. In addition, the flange portion 314 of the movable rod 310 is provided with an outside stopper end portion 316 downward protruded along the entire circumference for preventing deviation of the inside protrusion portion 620. In this case, the location of the outside stopper end portion 316 can be set at the same radial position as the outer circumferential surface of the mount rod 510 to symmetrically support the inside protrusion portion 620.

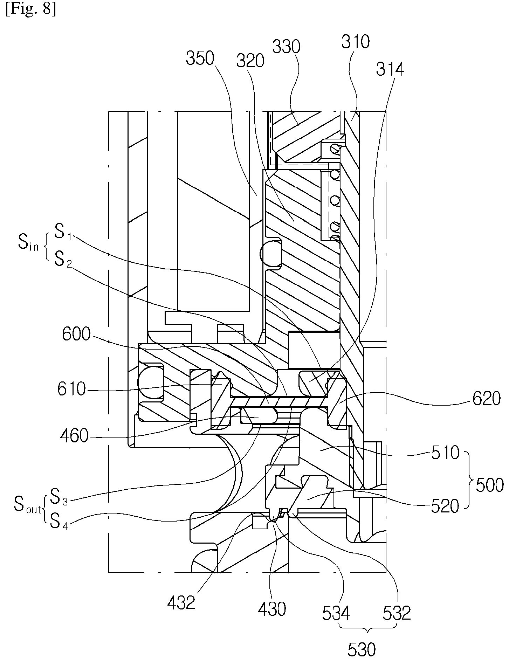

Furthermore, the inside effective area Sin of the membrane 600 including the area S1 of the upper surface of the flange portion 314 and the area S2 of the inside surface of the membrane 600 exposed directly the pressure through the internal path is set to be identical to the outside effective area Sout of the membrane 600 including the area S3 of the lower surface of the annular body 460 exposed to the external path and the area S4 of the outside surface of the membrane 600 exposed directly the pressure through the external path to make the pressure equilibrium state between the inside surface and outside surface of the membrane 600, as depicted in Fig. 8.

Accordingly, when switching the drive mode in the suspension system into the state of a normal mode or a sport mode, respectively, the present disclosure configured as described above can divide the flow path of fluid through each port from the plurality of independent chambers into the external path and the internal path and set the load by the pressure applied to the inside surface and outside surface of the membrane 600, respectively, from the fluid as the equilibrium state, thus smoothly switching the opening/closing of the port by an ON/OFF control for a relatively small magnitude of an operating power applied to the coil 360 of the solenoid valve 300.

Particularly, the present disclosure can provide the narrow section portion that can minimize the flow cross-sectional area of the air between the outer circumferential surface of the movable rod 310 through the large diameter portion 322 and the small diameter portion 324 that are located on the inner circumferential surface of the magnetic core 320 upon setting the internal path for fluid flow to implement the air cushion function, thus greatly reducing the impact noise caused by the opening/closing operation of the solenoid valve 300.

In addition, when the solenoid valve 300 is switched from the OFF state to the ON state by applying the variable pitch spring 340 provided between the magnetic core 320 and the plunger 330, the present disclosure can set the movement displacement speed of the plunger 330 depending upon the electromagnetic force generated from the magnetic core 320 to be relatively great at the initial operating timing, while after the initial operating timing, it can set the movement displacement speed of the plunger 330 to be relatively small by implementing a relatively higher elastic force than the initial stage, thus effectively reducing the impact noise caused at the contact portion of the port opening/closing portion of the separator 400.

In addition, the present disclosure can effectively absorb the impact caused by the contact between the upper end portion of the plunger 330 and the upside inner circumferential surface of the bobbin 350 through the ring-shape damper 336 interposed between the plunger 330 and the bobbin 350, and thereby minimize the occurrence of abnormal noise during opening of the solenoid valve 300.

In addition, in the present disclosure, the axial protrusion portions 352 formed on the inner circumferential surface of the bobbin 350 can reinforce the structural rigidity of the member in addition to setting the internal path for fluid flow, thus inducing the accurate tight contact between the elastic protrusion portion 530 formed on the sealing member 520 of the valve structure body 500 and the compartment portion 430 of the separator 400, and thereby ensuring a stable closed state of flow path.

In addition, when the port of the separator 400 is switched into the closed state by the valve structure body 500 upon operation of the solenoid valve 300, the present disclosure can maintain more the fluid-tight state between the inclined surface 432 and inner circumferential surface of the compartment portion 430 through the elastic protrusion portion 530 composed of a pair of the first lip portion 532 and the second lip portion 534 provided in the sealing member 520, thus accurately operating the suspension system in the state of the sport mode.

In addition, when the compartment portion 430 of the separator 400 contacts with the sealing member 520 of the valve structure body 500, the present disclosure can mitigate the impact caused when the second lip portion 534 of the elastic protrusion portion 530 contacts with the inclined surface 432 of the compartment portion 430 prior to the first lip portion 532, thus remarkably reducing the abnormal noise caused by the ON/OFF of the solenoid valve 300. Particularly, the first lip portion 532 of the elastic protrusion portion 530 can be overlapped with the inner circumferential surface of the compartment portion 430 by the protruded length, thus enhancing fluid-tight performance.

## Claims

1. A solenoid valve assembly for switching a mode in a suspension system, comprising:
a separator (400) having a plurality of ports (410, 420) that can individually communicate with a plurality of independent chambers;
a valve structure body (500) installed to contact with a stepped compartment portion between the ports (410, 420) of the separator (400) to adjust fluid flow between the chambers formed through the port;
a solenoid valve (300) for providing an operating force to the valve structure body (500), and having an internal path for fluid flow implementing pressure equilibrium, the internal path being connected to an external path for fluid flow through the port of the separator (400);
a membrane (600) provided in the solenoid valve (300) to disconnect the communication between the external path and the internal path for fluid flow, wherein the solenoid valve (300), the valve structure body (500), and the membrane (600) are configured so that an area on which a hydraulic pressure acts through the external path and an area on which a hydraulic pressure acts through the internal path upon opening and closing of the port of the separator (400) are set to be same,
wherein the solenoid valve (300) comprises:
a narrow section portion minimizing the flow cross-sectional area for the internal path for fluid flow;
a movable rod (310) coaxially engaged with the valve structure body (500) and movably installed;
a magnetic core (320) for movably receiving the movable rod (310) therein, and coaxially engaged with the separator (400);
a plunger (330) coaxially engaged with the movable rod (310), and movably installed in the axial direction toward the magnetic core (320);
a variable pitch spring (340) interposed between the magnetic core (320) and the plunger (330); and
a bobbin (350) coaxially engaged with the magnetic core (320), and movably receiving the movable rod (310) and the plunger (330) therein,
wherein the movable rod (310) and the plunger (330) comprises an axial through-hole portion (312) for forming an internal path, respectively,
wherein axial protrusion portions (352) are provided between an inner circumferential surface of the bobbin (350) and an outer circumferential surface of the plunger (330),
wherein the axial protrusion portions (352) are lengthy formed along the axial direction of the bobbin (330) so that intervals are formed between each of the axial protrusion portions (352) over the entire inner circumferential surface of the bobbin (350), the axial protrusion portions (352) forming the internal path between the outer circumferential surface of the plunger (330) and the inner circumferential surface of the bobbin (350), and
the magnetic core (320) continuously comprises a large diameter portion (322) for receiving the variable pitch spring (340) between an outer circumferential surface of the movable rod (310) and an inner circumferential surface of the magnetic core (320), and a small diameter portion (324) provided on a bottom of the large diameter portion (322) for minimizing the flow cross-sectional area.

2. The solenoid valve assembly of claim 1, wherein a stepped portion for supporting a lower end portion of the variable pitch spring (340) is interposed between the large diameter portion (322) and the small diameter portion (324), and an inner diameter extension (325) portion for setting the flow cross-sectional area to be larger than the large diameter portion (322) is interposed between the outer circumferential surface of the movable rod (310) and the bottom of the small diameter portion (324).

3. The solenoid valve assembly of claim 1, wherein the internal path is set to reach an inside surface of the membrane (600) and sequentially pass through the axial through-hole portion (312) of the movable rod (310), the axial through-hole portion (332) of the plunger (330), the axial protrusion portion (352) of the bobbin (350), the large diameter portion (322), the small diameter portion (324), and the inner diameter extension portion (325).

4. The solenoid valve assembly of claim 1, wherein the separator (400) and the magnetic core (320) are provided with a seating end portion for fixing an outer diameter portion of the membrane (600) at a location facing each other, respectively, the seating end portion of the magnetic core (320) is provided with an insertion groove portion (326a) concavely formed in the axial direction thereof, and the seating end portion of the separator (400) is provided with a protrusion end portion (442) extended in the axial direction thereof to be inserted into the insertion groove portion (326a).

5. The solenoid valve assembly of claim 4, wherein the separator (400) has a stepped portion provided from the seating end portion on the inside thereof, and an annular body (460) for supporting the bottom of the membrane (600) to identically set the area on which the hydraulic pressure acts between the inside surface and outside surface of the membrane (600) is mounted in the stepped portion.

6. The solenoid valve assembly of claim 1, wherein the valve structure body (500) comprises a mount rod (510) engaged to the movable rod (310), and a sealing member (520) engaged to the mount rod (510) to contact with the compartment portion of the port.

7. The solenoid valve assembly of claim 6, wherein the movable rod (310) is provided with a flange portion protruded in a radial direction for fixing the inner diameter portion of the membrane (600) at the location facing the mount rod (510) to identically set the area on which the hydraulic pressure acts between the inside surface and outside surface of the membrane (600).

8. The solenoid valve assembly of claim 6, wherein the outer diameter portion of the membrane (600) is provided with an outside protrusion portion (610) protruded toward the seating end portion of the magnetic core (320), the seating end portion of the magnetic core (320) is provided with an inside stopper end portion for preventing deviation of the outside protrusion portion (610), and a location of the inside stopper end portion is set at the same radial position as the inner diameter portion of the annular body (460) to symmetrically support the outside protrusion portion (610).

9. The solenoid valve assembly of claim 7, wherein the inner diameter portion of the membrane (600) is provided with an inside protrusion portion protruded toward the flange portion of the movable rod (310), the flange portion of the movable rod (310) is provided with an outside stopper end portion for preventing deviation of the inside protrusion portion, and the location of the outside stopper end portion is set at the same radial position as the outer circumferential surface of the mount rod (510) to symmetrically support the inside protrusion portion.

10. The solenoid valve assembly of claim 6, wherein the sealing member (520) comprises a plurality of elastic protrusion portions (530) for maintaining fluid-tight at the portion facing the compartment portion of the separator (400), the elastic protrusion portion (530) is composed of a first lip portion (532) and a second lip portion (534) concentrically located to be spaced apart from each other on an inside and outside of a bottom of the sealing member (520), respectively, and a protruded length of the second lip portion (534) is set longer than a protruded length of the first lip portion (532).

11. The solenoid valve assembly of claim 10, wherein the first lip portion (532) is formed in a circular structure to tightly contact with the inner circumferential surface of the compartment portion of the separator (400), and the second lip portion (534) is formed in a divided structure radially located from a center of the first lip portion (532) to tightly contact with an inclined surface formed on the outer circumferential surface of the compartment portion of the separator (400).

12. The solenoid valve assembly of claim 1, wherein the plunger (330) comprises a damper (336) installed to be protruded toward the upper inside surface of the bobbin (350) on the upper surface of the plunger (330).

13. The solenoid valve assembly of claim 12, wherein the damper (336) is seated in a receiving groove portion formed on the upper surface of the plunger (330), and the damper (336) comprises a cutting portion for setting the internal path that can mutually communicate the flow path between the axial through-hole portion (332) of the plunger (330) and the axial protrusion portion (352) of the bobbin (350) on at least one location along an entire circumference of the damper (336).

14. The solenoid valve assembly of claim 9, wherein an inside effective area of the membrane (600) including an area of the upper surface of the flange portion and an area of an inside surface of the membrane (600) exposed directly the pressure through the internal path is set to be identical to an outside effective area of the membrane (600) including an area of the lower surface of the annular body (460) exposed to the external path and an area of the outside surface of the membrane (600) exposed directly the pressure through the external path to make the pressure equilibrium state between the inside surface and outside surface of the membrane (600).

## Patentansprüche

1. Eine Magnetventilanordnung zum Umschalten eines Modus in einem Dämpfungssystem, die folgende Merkmale aufweist:
einen Separator (400) mit einer Mehrzahl von Öffnungen (410, 420), die einzeln mit einer Mehrzahl von unabhängigen Kammern kommunizieren können;
einen Ventilstrukturkörper (500), der dahingehend verbaut ist, einen gestuften Raumabschnitt zwischen den Öffnungen (410, 420) des Separators (400) zu kontaktieren, um einen Fluidfluss zwischen den Kammern einzustellen, gebildet durch die Öffnung hindurch;
ein Magnetventil (300) zum Bereitstellen einer Betriebskraft an den Ventilstrukturkörper (500) und mit einen Innenpfad für einen Fluidfluss, der ein Druckgleichgewicht implementiert, wobei der Innenpfad mit einem Außenpfad für einen Fluidfluss durch die Öffnung des Separators (400) verbunden ist;
eine Membran (600), die in dem Magnetventil (300) dahingehend bereitgestellt ist, die Kommunikation zwischen dem Außenpfad und dem Innenpfad für den Fluidfluss zu trennen, wobei das Magnetventil (300), der Ventilstrukturkörper (500) und die Membran (600) so konfiguriert sind, dass eine Fläche, auf die ein hydraulischer Druck durch den Außenpfad wirkt, und eine Fläche, auf die ein hydraulischer Druck durch den Innenpfad wirkt, beim Öffnen und Schließen der Öffnung des Separators (400) dahingehend eingestellt sind, gleich zu sein,
wobei das Magnetventil (300) Folgendes aufweist:
einen Schmalbereichsabschnitt, der die Querschnittsflussfläche für den Innenpfad zum Fluidfluss minimiert;
einen beweglichen Stab (310), der koaxial mit dem Ventilstrukturkörper (500) in Eingriff steht und beweglich verbaut ist;
einen Magnetkern (320) zum beweglichen Empfangen des beweglichen Stabs (310) darin, wobei derselbe koaxial mit dem Separator (400) in Eingriff steht;
einen Kolben (330), der koaxial mit dem beweglichen Stab (310) in Eingriff steht und beweglich in der Axialrichtung hin zu dem Magnetkern (320) verbaut ist;
eine Variabler-Abstand-Feder (340), die zwischen dem Magnetkern (320) und dem Kolben (330) eingefügt ist; und
eine Spule (350), die koaxial mit dem Magnetkern (320) in Eingriff steht und den beweglichen Stab (310) und den Kolben (330) beweglich darin aufnimmt,
wobei der bewegliche Stab (310) und der Kolben (330) einen Axialdurchgangslochabschnitt (312) zum Bilden eines jeweiligen Innenpfades aufweisen,
wobei Axialvorsprungsabschnitte (352) zwischen einer Innenumfangsoberfläche der Spule (350) und einer Außenumfangsoberfläche des Kolbens (330) bereitgestellt sind,
wobei die Axialvorsprungsabschnitte (352) länglich entlang der Axialrichtung der Spule (330) gebildet sind, so dass Abstände zwischen jedem der Axialvorsprungsabschnitte (352) über die gesamte Innenumfangsoberfläche der Spule (350) gebildet sind, wobei die Axialvorsprungsabschnitte (352) den Innenpfad zwischen der Außenumfangsoberfläche des Kolbens (330) und der Innenumfangsoberfläche der Spule (350) bilden, und
wobei der Magnetkern (320) fortlaufend einen Großer-Durchmesser-Abschnitt (322) zum Aufnehmen der Variabler-Abstand-Feder (340) zwischen einer Außenumfangsoberfläche des beweglichen Stabs (310) und einer Innenumfangsoberfläche des Magnetkerns (320) und einen Kleiner-Durchmesser-Abschnitt (324) aufweist, der auf einem Boden des Großer-Durchmesser-Abschnitts (322) zum Minimieren der Querschnittsflussfläche bereitgestellt ist.

2. Die Magnetventilanordnung gemäß Anspruch 1, wobei ein gestufter Abschnitt zum Stützen eines unteren Endabschnitts der Variabler-Abstand-Feder (340) zwischen dem Großer-Durchmesser-Abschnitt (322) und dem Kleiner-Durchmesser-Abschnitt (324) eingefügt ist, und ein Abschnitt einer Innenumfangserstreckung (325) zum Einstellen der Querschnittsflussfläche dahingehend, größer zu sein als der Großer-Durchmesser-Abschnitt (322), zwischen der Außenumfangsoberfläche des beweglichen Stabs (310) und dem Boden des Kleiner-Durchmesser-Abschnitts (324) eingefügt ist.

3. Die Magnetventilanordnung gemäß Anspruch 1, wobei der Innenpfad dahingehend eingestellt ist, eine Innenoberfläche der Membran (600) zu erreichen und sequenziell durch den Axialdurchgangslochabschnitt (312) des beweglichen Stabs (310), den Axialdurchgangslochabschnitt (332) des Kolbens (330), den Axialvorsprungsabschnitt (352) der Spule, den Großer-Durchmesser-Abschnitt (322), den Kleiner-Durchmesser-Abschnitt (324) und den Innendurchmessererstreckungsabschnitt (325) zu verlaufen.

4. Die Magnetventilanordnung gemäß Anspruch 1, wobei der Separator (400) und der Magnetkern (320) mit einem Auflageendabschnitt zum Befestigen eines Außendurchmesserabschnitts der Membran (600) an einer einander zugewandten Position versehen sind, wobei der Auflageendabschnitt des Magnetkerns (320) mit einem Einführungsrillenabschnitt (326a) versehen ist, der konkav in der Axialrichtung desselben gebildet ist, und der Auflageendabschnitt des Separators (400) mit einem Vorsprungsendabschnitt (442) versehen ist, der sich in der Axialrichtung desselben dahingehend, um in den Einführungsrillenabschnitt (326a) eingeführt zu sein.

5. Die Magnetventilanordnung gemäß Anspruch 4, wobei der Separator (400) einen gestuften Abschnitt aufweist, der von dem Auflageendabschnitt auf der Innenseite desselben bereitgestellt ist, und wobei ein ringförmiger Körper (460) zum Stützen des Bodens der Membran (600) dahingehend, die Fläche, auf die der hydraulische Druck agiert, zwischen der Innenoberfläche und der Außenoberfläche der Membran (600) identisch einzustellen, in dem gestuften Abschnitt montiert ist.

6. Die Magnetventilanordnung gemäß Anspruch 1, wobei der Ventilstrukturkörper (500) einen Montagestab (510) aufweist, der mit dem beweglichen Stab (310) in Eingriff steht, und ein Dichtungsbauglied (520) aufweist, das mit dem Montagestab (510) dahingehend in Eingriff steht, den Raumabschnitt der Öffnung zu kontaktieren.

7. Die Magnetventilanordnung gemäß Anspruch 6, wobei der bewegliche Stab (310) mit einem Flanschabschnitt versehen ist, der an einer Radialrichtung hervorsteht, zum Befestigen des Innendurchmesserabschnitts der Membran (600) an der Position, die dem Montagestab (510) zugewandt ist, um die Fläche, auf die der hydraulische Druck wirkt, zwischen der Innenoberfläche und der Außenoberfläche der Membran (600) identisch einzustellen.

8. Die Magnetventilanordnung gemäß Anspruch 6, wobei der Außendurchmesserabschnitt der Membran (600) mit einem Außenvorsprungsabschnitt (610) versehen ist, der hin zu dem Auflageendabschnitt des Magnetkerns (320) hervorsteht, wobei der Auflageendabschnitt des Magnetkerns (320) mit einem Innenanschlagsendabschnitt zum Verhindern einer Abweichung des Außenvorsprungsabschnitts (610) versehen ist, und eine Position des Innenanschlagsendabschnitts auf dieselbe Radialposition eingestellt ist wie der Innendurchmesserabschnitt des ringförmigen Körpers (460), um den Außenvorsprungsabschnitt (610) symmetrisch zu stützen.

9. Die Magnetventilanordnung gemäß Anspruch 7, wobei der Innendurchmesserabschnitt der Membran (600) mit einem Innenvorsprungsabschnitt versehen ist, der hin zu dem Flanschabschnitt des beweglichen Stabs (310) hervorsteht, der Flanschabschnitt des beweglichen Stabs (310) mit einem Außenanschlagsendabschnitt zum Verhindern einer Abweichung des Innenvorsprungsabschnitts versehen ist, und die Position des Außenanschlagsendabschnitts auf dieselbe Radialposition eingestellt ist wie die Außenumfangsoberfläche des Montagestabs (510), um den Innenvorsprungsabschnitt symmetrisch zu stützen.

10. Die Magnetventilanordnung gemäß Anspruch 6, wobei das Dichtungsbauglied (520) eine Mehrzahl von elastischen Vorsprungsabschnitten (530) zum Aufrechterhalten einer Fluiddichtung an dem Abschnitt aufweist, der dem Raumabschnitt des Separators (400) zugewandt ist, der elastische Vorsprungsabschnitt (530) aus einem ersten Lippenabschnitt (532) und einem zweiten Lippenabschnitt (534) besteht, die konzentrisch dahingehend positioniert sind, voneinander auf einer Innenseite und einer Außenseite eines Bodens des Dichtungsbauglieds (520) beabstandet zu sein, und eine hervorstehende Länge des zweiten Lippenabschnitts (534) länger eingestellt ist als eine hervorstehende Länge des ersten Lippenabschnitts (532).

11. Die Magnetventilanordnung gemäß Anspruch 10, wobei der erste Lippenabschnitt (532) in einer kreisförmigen Struktur gebildet ist, um die Innenumfangsoberfläche des Raumabschnitts des Separators (400) auf dichte Weise zu kontaktieren, und der zweite Lippenabschnitt (534) in einer aufgeteilten Struktur gebildet ist, radial von einer Mitte des ersten Lippenabschnitts (532) angeordnet, um eine geneigte Oberfläche, die auf der Außenumfangsoberfläche des Raumabschnitts des Separators (400) gebildet ist, dicht zu kontaktieren.

12. Die Magnetventilanordnung gemäß Anspruch 1, wobei der Kolben (330) einen Dämpfer (336) aufweist, der dahingehend verbaut ist, hin zu der oberen Innenoberfläche der Spule (350) auf der oberen Oberfläche des Kolbens (330) hervorzustehen.

13. Die Magnetventilanordnung gemäß Anspruch 12, wobei der Dämpfer (336) in einem Aufnahmerillenabschnitt aufliegt, der auf der oberen Oberfläche des Kolbens (330) gebildet ist, und der Dämpfer (336) einen Schnittabschnitt zum Einstellen des Innenpfades, der den Flusspfad zwischen dem axialen Durchgangslochabschnitt (332) des Kolbens (330) und den axialen Vorsprungsabschnitt (352) der Spule (350) zur Kommunikation bringen kann, an zumindest einer Position entlang des Gesamtumfangs des Dämpfers (336) aufweist.

14. Die Magnetventilanordnung gemäß Anspruch 9, wobei eine effektive Innenfläche der Membran (600), die eine Fläche der oberen Oberfläche des Flanschabschnitts und eine Fläche der Innenoberfläche der Membran (600) umfasst, die dem Druck durch den Innenpfad direkt ausgesetzt ist, dahingehend eingestellt ist, identisch zu einer effektiven Außenfläche der Membran (600) zu sein, die eine Fläche der unteren Oberfläche des ringförmigen Körpers (460), die dem Außenpfad ausgesetzt ist, und eine Fläche der Außenoberfläche der Membran (600) umfasst, die dem Druck durch den Außenpfad direkt ausgesetzt ist, um den Druckgleichgewichtszustand zwischen der Innenoberfläche und der Außenoberfläche der Membran (600) herzustellen.

## Revendications

1. Ensemble électrovanne pour la commutation d'un mode dans un système de suspension, comprenant :
un séparateur (400) comportant une pluralité d'orifices (410, 420) qui peuvent individuellement communiquer avec une pluralité de chambres indépendantes ;
un corps de structure de vanne (500) installé en contact avec une partie compartiment étagé entre les orifices (410, 420) du séparateur (400) afin d'ajuster un écoulement de fluide entre les chambres formé à travers l'orifice ;
une électrovanne (300) destinée à fournir une force de fonctionnement au corps de structure de vanne (500), et comportant un chemin interne pour écoulement de fluide mettant en œuvre un équilibre de pression, le chemin interne étant raccordé à un chemin externe pour écoulement de fluide à travers l'orifice du séparateur (400) ;
une membrane (600) disposée dans l'électrovanne (300) pour déconnecter la communication entre le chemin externe et le chemin interne pour écoulement de fluide, dans lequel l'électrovanne (300), le corps de structure de vanne (500) et la membrane (600) sont configurés de telle sorte qu'une superficie sur laquelle une pression hydraulique agit par le biais du chemin externe et une superficie sur laquelle une pression hydraulique agit par le biais du chemin interne lors de l'ouverture et de la fermeture de l'orifice du séparateur (400) sont réglées pour être les mêmes,
dans lequel l'électrovanne (300) comprend :
une partie de section étroite minimisant la superficie de section transversale d'écoulement pour le chemin interne pour écoulement de fluide ;
une tige mobile (310) en prise coaxiale avec le corps de structure de vanne (500) et installée de manière mobile ;
un noyau magnétique (320) pour recevoir de manière mobile la tige mobile (310) dans celui-ci, et en prise coaxiale avec le séparateur (400) ;
un piston-plongeur (330) en prise coaxiale avec la tige mobile (310), et installé de manière mobile dans la direction axiale vers le noyau magnétique (320) ;
un ressort à pas variable (340) interposé entre le noyau magnétique (320) et le piston-plongeur (330) ; et
une bobine (350) en prise coaxiale avec le noyau magnétique (320), et recevant de manière mobile la tige mobile (310) et le piston-plongeur (330) dans celle-ci,
dans lequel la tige mobile (310) et le piston-plongeur (330) comprennent une partie trou traversant axial (312) pour former un chemin interne, respectivement,
dans lequel des parties saillies axiales (352) sont disposées entre une surface circonférentielle interne de la bobine (350) et une surface circonférentielle externe du piston-plongeur (330),
dans lequel les parties saillies axiales (352) sont formées en longueur le long de la direction axiale de la bobine (330) de telle sorte que des intervalles sont formés entre chacune des parties saillies axiales (352) sur toute la surface circonférentielle interne de la bobine (350), les parties saillies axiales (352) formant le chemin interne entre la surface circonférentielle externe du piston-plongeur (330) et la surface circonférentielle interne de la bobine (350), et
le noyau magnétique (320) comprend de manière continue une partie de grand diamètre (322) pour recevoir le ressort à pas variable (340) entre une surface circonférentielle externe de la tige mobile (310) et une surface circonférentielle interne du noyau magnétique (320), et une partie de petit diamètre (324) disposée sur un fond de la partie de grand diamètre (322) pour minimiser la superficie de section transversale d'écoulement.

2. Ensemble électrovanne selon la revendication 1, dans lequel une partie étagée destinée à supporter une partie extrémité inférieure du ressort à pas variable (340) est interposée entre la partie de grand diamètre (322) et la partie de petit diamètre (324), et une partie extension de diamètre interne (325) destinée à régler la superficie de section transversale d'écoulement pour qu'elle soit plus grande que la partie de grand diamètre (322) est interposée entre la surface circonférentielle externe de la tige mobile (310) et le fond de la partie de petit diamètre (324).

3. Ensemble électrovanne selon la revendication 1, dans lequel le chemin interne est réglé pour atteindre une surface intérieure de la membrane (600) et traverser séquentiellement la partie trou traversant axial (312) de la tige mobile (310), la partie trou traversant axial (332) du piston-plongeur (330), la partie saillie axiale (352) de la bobine (350), la partie de grand diamètre (322), la partie de petit diamètre (324) et la partie extension de diamètre interne (325).

4. Ensemble électrovanne selon la revendication 1, dans lequel le séparateur (400) et le noyau magnétique (320) sont pourvus d'une partie extrémité de siège destinée à fixer une partie de diamètre externe de la membrane (600) au niveau d'un emplacement se faisant mutuellement face, respectivement, la partie extrémité de siège du noyau magnétique (320) est pourvue d'une partie rainure d'insertion (326a) formée de manière concave dans la direction axiale de celle-ci, et la partie extrémité de siège du séparateur (400) est pourvue d'une partie extrémité de saillie (442) étendue dans la direction axiale de celle-ci pour être insérée dans la partie rainure d'insertion (326a).

5. Ensemble électrovanne selon la revendication 4, dans lequel le séparateur (400) comporte une partie étagée disposée par rapport à la partie extrémité de siège sur l'intérieur de celui-ci, et un corps annulaire (460) destiné à supporter le fond de la membrane (600) pour régler de manière identique la superficie sur laquelle la pression hydraulique agit entre la surface intérieure et la surface extérieure de la membrane (600) est monté dans la partie étagée.

6. Ensemble électrovanne selon la revendication 1, dans lequel le corps de structure de vanne (500) comprend une tige de montage (510) en prise avec la tige mobile (310), et un élément d'étanchéité (520) en prise avec la tige de montage (510) pour être en contact avec la partie compartiment de l'orifice.

7. Ensemble électrovanne selon la revendication 6, dans lequel la tige mobile (310) est pourvue d'une partie bride faisant saillie dans une direction radiale pour fixer la partie de diamètre interne de la membrane (600) au niveau de l'emplacement faisant face à la tige de montage (510) pour régler de manière identique la superficie sur laquelle la pression hydraulique agit entre la surface intérieure et la surface extérieure de la membrane (600).

8. Ensemble électrovanne selon la revendication 6, dans lequel la partie de diamètre externe de la membrane (600) est pourvue d'une partie saillie extérieure (610) faisant saillie vers la partie extrémité de siège du noyau magnétique (320), la partie extrémité de siège du noyau magnétique (320) est pourvue d'une partie extrémité d'arrêt intérieure pour empêcher un écart de la partie saillie extérieure (610), et un emplacement de la partie extrémité d'arrêt intérieure est réglé pour être à la même position radiale que la partie de diamètre interne du corps annulaire (460) pour supporter de manière symétrique la partie saillie extérieure (610).

9. Ensemble électrovanne selon la revendication 7, dans lequel la partie de diamètre interne de la membrane (600) est pourvue d'une partie saillie intérieure faisant saillie vers la partie bride de la tige mobile (310), la partie bride de la tige mobile (310) est pourvue d'une partie extrémité d'arrêt extérieure pour empêcher un écart de la partie saillie intérieure, et l'emplacement de la partie extrémité d'arrêt extérieure est réglé pour être à la même position radiale que la partie de diamètre externe de la tige de montage (510) pour supporter de manière symétrique la partie saillie intérieure.

10. Ensemble électrovanne selon la revendication 6, dans lequel l'élément d'étanchéité (520) comprend une pluralité de parties saillies élastiques (530) pour maintenir une étanchéité aux fluides au niveau de la partie faisant face à la partie compartiment du séparateur (400), la partie saillie élastique (530) est composée d'une première partie lèvre (532) et d'une seconde partie lèvre (534) situées de manière concentrique pour être espacées l'une de l'autre sur un intérieur et un extérieur d'un fond de l'élément d'étanchéité (520), respectivement, et une longueur de saillie de la seconde partie lèvre (534) est réglée pour être plus longue qu'une longueur de saillie de la première partie lèvre (532).

11. Ensemble électrovanne selon la revendication 10, dans lequel la première partie lèvre (532) est formée dans une structure circulaire pour être en contact étroit avec la surface circonférentielle interne de la partie compartiment du séparateur (400), et la seconde partie lèvre (534) est formée dans une structure divisée située radialement par rapport à un centre de la première partie lèvre (532) pour être en contact étroit avec une surface inclinée formée sur la surface circonférentielle externe de la partie compartiment du séparateur (400).

12. Ensemble électrovanne selon la revendication 1, dans lequel le piston-plongeur (330) comprend un amortisseur (336) installé pour faire saillie vers la surface intérieure supérieure de la bobine (350) sur la surface supérieure du piston-plongeur (330).

13. Ensemble électrovanne selon la revendication 12, dans lequel l'amortisseur (336) est logé dans une partie rainure de réception formée sur la surface supérieure du piston-plongeur (330), et l'amortisseur (336) comprend une partie de découpe pour régler le chemin interne qui peut faire communiquer mutuellement le chemin d'écoulement entre la partie trou traversant axial (332) du piston-plongeur (330) et la partie saillie axiale (352) de la bobine (350) sur au moins un emplacement le long d'une circonférence entière de l'amortisseur (336).

14. Ensemble électrovanne selon la revendication 9, dans lequel une superficie réelle intérieure de la membrane (600) incluant une superficie de la surface supérieure de la partie bride et une superficie d'une surface intérieure de la membrane (600) exposée directement à la pression à travers le chemin interne est réglée pour être identique à une superficie réelle extérieure de la membrane (600) incluant une superficie de la surface inférieure du corps annulaire (460) exposée au chemin externe et une superficie de la surface extérieure de la membrane (600) exposée directement à la pression à travers le chemin externe pour créer l'état d'équilibre de pression entre la surface intérieure et la surface extérieure de la membrane (600).
